# EUROPEAN PATENT APPLICATION

(11) **EP 1 382 867 A1**
(43) Date of publication of application: **21.01.2004**
(21) Application number: 02718593.3
(22) Date of filing: 15.04.2002
(51) Int. Cl.: F16C 19/52, F16C 33/60, F16C 33/78, F16C 41/00, F16D 3/20, B60B 35/18, B60T 8/00

(54) **WHEEL BEARING DEVICE**

(30) Priority: 24.04.2001 JP 2001126189
(71) Applicant: NTN CORPORATION, Osaka-shi Osaka 550-0003 (JP)
(72) Inventor: TAJIMA, EiJI, c/o NTN CORPORATION, Iwata-shi, Shizuoka 438-0037 (JP); TAKAKI, Masuo, c/o NTN CORPORATION, Osaka-shi, Osaka 550-0003 (JP)
(74) Representative: Hillier, Peter
(86) International application number: PCT/JP2002/003748
(87) International publication number: WO 2002/088557

(57) **Abstract**

The bearing clearance is controlled to be negative by a dimensional control process so as to enhance bearing rigidity. A multipole encoder 81 is attached to a slinger, which is a rotating member, of a sealing assembly 13, and a sensor 82 for sensing a change in magnetic flux caused by rotation of the encoder 81 is provided to an outer member 10 that is the stationary side, so as to determine the speed of rotation of the rotating member based on detected data from the sensor 82. Because of the enhanced bearing rigidity, the air gap between the encoder 81 and the sensor 82 is accurately maintained even if moment load is applied to the bearing device.

## Description

### BACKGROUND OF THE INVENTION

The present invention relates to a wheel bearing device (or hub bearing) for rotatably supporting a wheel relative to the body of a vehicle such as an automobile. Wheel bearing devices for automobiles are classified into those for drive-wheel applications and driven-wheel applications, and there are various types of bearing structures in accordance with their applications.

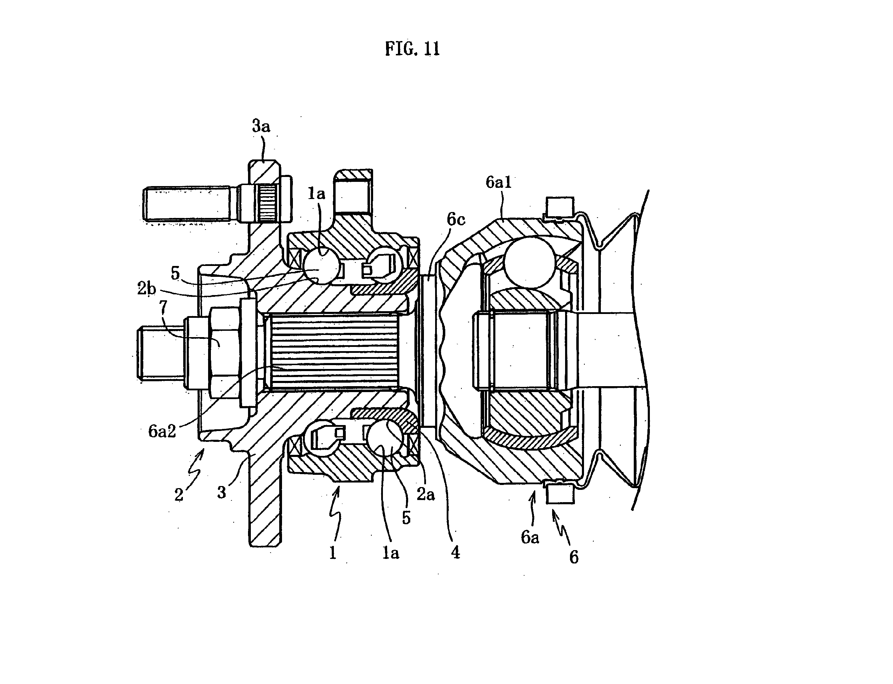

FIG. 11 illustrates one example of a drive wheel bearing device, which is generally composed of an outer member 1 having double-row outer races 1a on an inner periphery thereof, an inner member 2 having inner races 2a, 2b opposite the outer races 1a, and double-row rollers 5 interposed between the outer member 1 and the inner member 2. The inner member 2 includes a wheel hub 3 and an inner ring 4. press-fitted to the outer periphery of the wheel hub, and one inner race 2a is formed on the outer periphery of the inner ring 4, while the other inner race 2b is formed on the outer periphery of the wheel hub 3. The wheel hub 3 includes a wheel flange 3a for attachment of a wheel, to which a wheel (not shown) will be attached.

The wheel hub 3 is coupled to an outer joint member 6a of a constant velocity universal joint 6 in the drive wheel bearing device. The outer joint member 6a consists of a cup-shaped mouth part 6a1 and a solid stem part 6a2, and the stem part 6a2 is coupled to the wheel hub 3 by engagement of serrations. A nut 7 is screwed on the shaft end of the stem part 6a2 and tightened so as to press the end face of the inner ring 4 onto the shoulder 6c of the outer joint member 6a, whereby positioning of the wheel hub 3 and the inner ring 4 is achieved in the axial direction and preload is applied to the rollers 5. The double-row rollers 5 roll at predetermined contact angles, respectively, so that they enhance the bearing rigidity with the above preload and bear the moment loads.

The recent trend is toward a more compact and lightweight structure around the wheels and more freedom of design, and more and more wheel bearing devices include integrated ABS (antilock brake system) wheel rotation speed sensing means.

Generally, the wheel bearing device takes bending moment when.the driving vehicle turns, and various constituent elements of the bearing device may suffer from resilient deformation because of this moment load. This resilient deformation may cause a displacement or misalignment of an ABS sensor of the rotation speed sensing means integrated in the wheel bearing device, leading to lowered precision in the measurement of wheel rpm on the basis of which the ABS operates.

Particularly when magnetic encoders are adopted as the wheel rotation speed sensing means, as in the recent years, even a slight change in the air gap can adversely affect the sensor precision, i.e., even a small resilient deformation caused by a slight steering movement in a lane change or the like can affect the sensor precision; improvements in this respect are thus required.

In view of the above, an object of the present invention is to provide a wheel bearing device including ABS wheel rotation speed sensing means that can measure the wheel rpm with high precision.

### SUMMARY OF THE INVENTION

A wheel bearing device to which the invention is applied includes an outer member having double-row outer races on an inner periphery thereof, an inner member having double-row inner races respectively opposite the outer races on an outer periphery thereof, and double-row rollers interposed between the respective races of the outer member and the inner member, and a wheel flange for attachment of a wheel provided to either one of the outer member and the inner member, and supports a wheel such as to be rotatable relative to the vehicle body.

In this type of wheel bearing device, in order to reduce the small change in the aforementioned air gap, the bearing clearance needs to be made negative so as to enhance the bearing rigidity and to suppress the resilient deformation caused by moment load. In prior art, the initial bearing clearance before assembling the bearing device to the vehicle body is set positive to allow for a decrease in the bearing clearance due to tightening of a nut, and the bearing clearance is made negative after the assembly by tightening the nut; however, an optimal preload (negative clearance) is hard to achieve because there is no means of measuring the actual clearance, and also, it is difficult to closely control the preload because of variations in the tightening torque of the nut. For these reasons, the bearing clearance sometimes remained positive even after the tightening of the nut.

Making the bearing clearance negative is advantageous in improving the rolling life and rigidity of the bearing, and in suppressing fretting; reliable means of making the internal clearance negative is thus desirable in these respects, too.

In view of: the above, according to the invention, the wheel bearing device has a negative bearing clearance whose dimension is controlled, and includes rotation speed sensing means having a multipole encoder attached to a rotating member and a sensor for sensing a change in magnetic flux caused by rotation of the encoder, so as to determine the speed of rotation of the rotating member based on detected data from the sensor.

By thus controlling the dimension of the bearing clearance, a preset negative clearance is achieved reliably and precisely, whereby the rigidity and rolling life of the bearing are improved, and the risk of fretting reduced. Because of the negative clearance that enhances the bearing rigidity, possible resilient deformation of bearing components is suppressed even when a bending moment is applied to the bearing due to a change in the driving condition of the vehicle, and the precision of the rotation speed sensing means for measuring the wheel rpm is improved.

If the wheel bearing device includes a sealing assembly for sealing a space between the inner member and the outer member, the encoder may be attached to a slinger, which is a rotating member, of the sealing assembly, so as to provide thin, compact, and lightweight rotation speed sensing means.

In this wheel bearing device, one side face of the wheel flange forms a brake rotor attachment surface. In this case, by controlling the amplitude of surface vibration on the brake rotor attachment surface to be within a specified limit, vibration of the brake rotor attached to this surface is restrained to a desired level, and brake judder and local wear of the brake can be suppressed. Thereby, the elaborate process of adjusting vibration after the assembly of the brake rotor is made unnecessary. In this invention, because the bearing rigidity is enhanced by the negative clearance whose dimension is controlled as noted above, deformation of the bearing components or looseness in the device are prevented, and thus the surface vibration on the brake rotor attachment surface is controlled with a higher degree of precision.

The specified limit should preferably be set such that the surface vibration on the brake rotor attachment surface takes place with a maximum vibration amplitude of 50 µm or less, when either one of the outer member and the inner member is rotated relative to the other one that is stationary.

The inner member of the above wheel bearing device includes a first inner member having one of the inner races and a second inner member having the other of the inner races .

More specifically, the first inner member may be a wheel hub, for example, and the second inner member may be an inner ring fitted to an outer periphery of the wheel hub, or, the first inner member may be a wheel hub and the second inner member may be an outer joint member of a constant velocity universal joint. The outer joint member is a constituent element of the constant velocity universal joint and has a plurality of track grooves in the inner periphery. In either case, the wheel flange may be formed on the wheel hub, i.e., the inner member is the rotating side and the outer member is the stationary side.

Furthermore, the first inner member and the second inner member may be formed as two inner rings abutted on each other. In this case, the wheel flange may be formed on the outer member, i.e., the inner member is the stationary side and the outer member is the rotating side, contrary to the above.

In either one of the above cases, the first inner member and the second inner member may be coupled together using a nut or by swaging.

### BRIEF DESCRIPTION OF THE DRAWINGS

FIG. 1 is a cross-sectional view of a wheel bearing device according to one embodiment of the invention, in which the inner member rotates;
FIG. 2 is an enlarged cross-sectional view of major parts of the wheel bearing device of FIG. 1;
FIG. 3 is a perspective view of an encoder;
FIG. 4 is a cross-sectional view illustrating the dimensional relationship between the outer member, the wheel hub, and the inner ring;
FIG. 5 is a cross-sectional view illustrating a dimensional control process;
FIG. 6 is a cross section of an apparatus for measuring the amplitude of surface vibration in a brake rotor;
FIG. 7 is a cross section of another embodiment of the invention, in which the inner member rotates;
FIG. 8 is a cross section of yet another embodiment of the invention, in which the inner member rotates;
FIG. 9 is a cross section of a further embodiment of the invention, in which the outer member rotates;
FIG. 10 is a cross section of another embodiment of the invention, in which the outer member rotates; and
FIG. 11 is a cross section of a prior art wheel bearing device.

### DESCRIPTION OF THE PREFERRED EMBODIMENTS

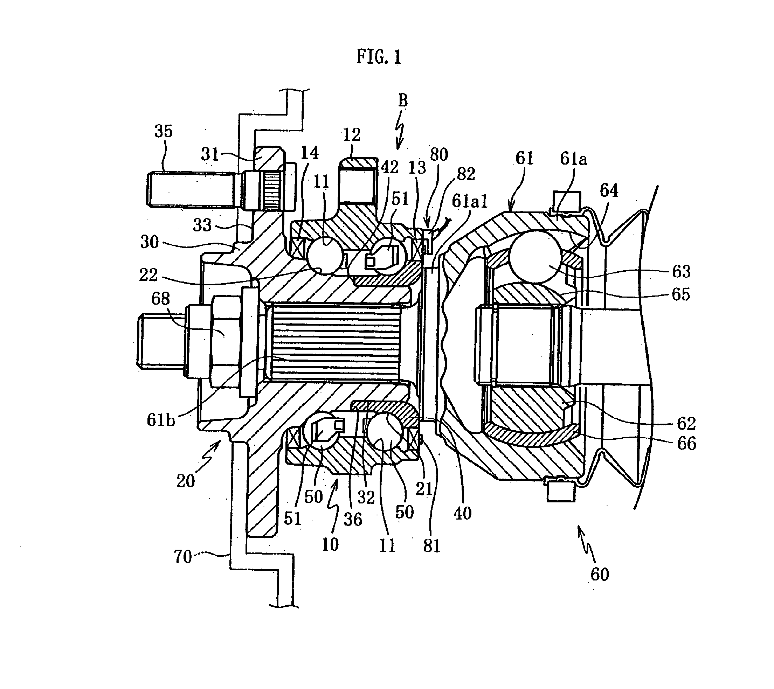

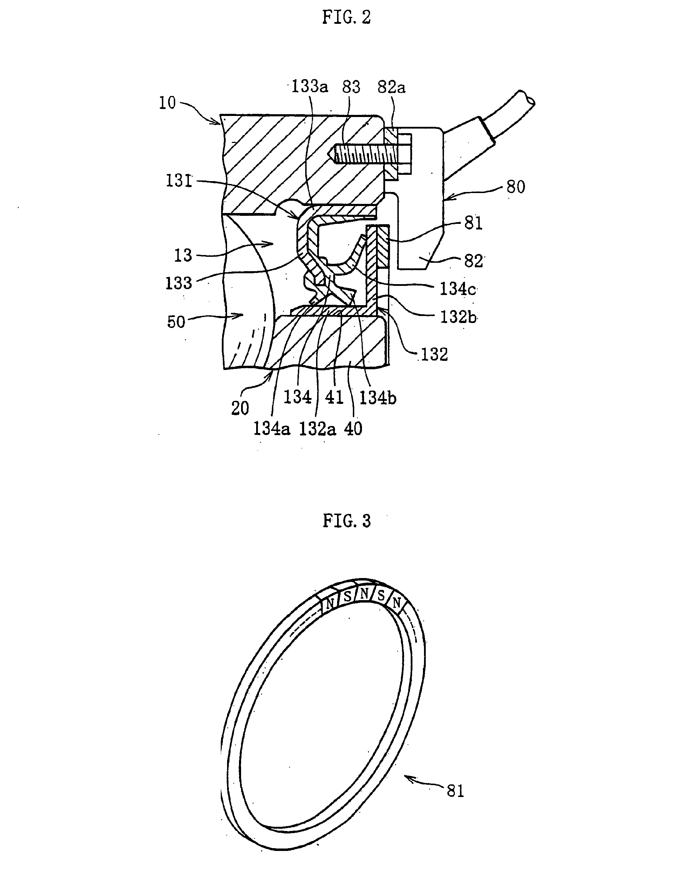

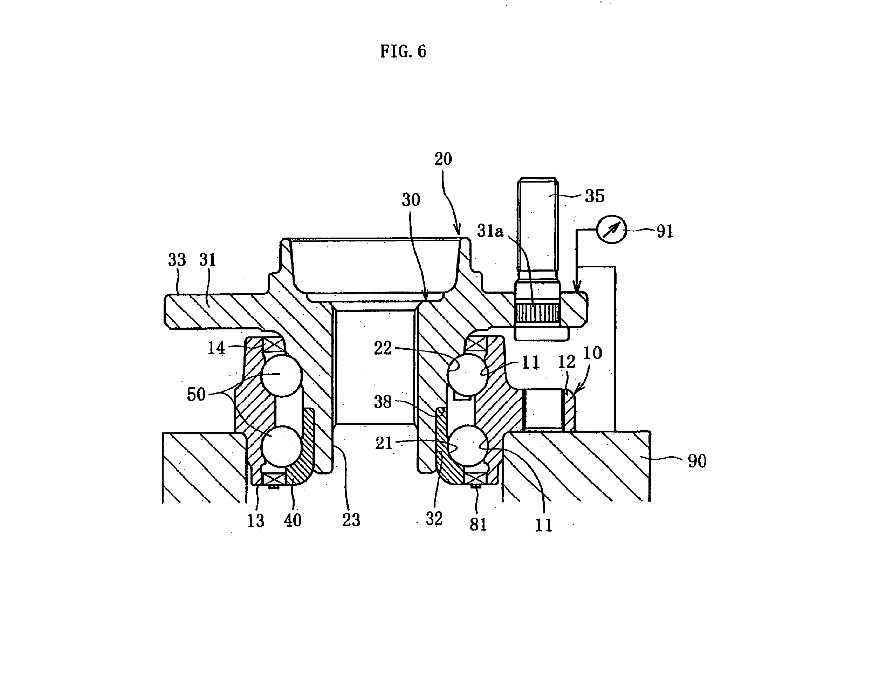

Preferred embodiments of the present invention will be hereinafter described with reference to FIG. 1 to FIG. 10. "Outboard side" and "inboard side" in the following description refer to the outer side and inner side of the bearing device mounted on a vehicle, respectively. The left side is the outboard side and the right side is the inboard side in the drawings except for FIG. 3 and FIG. 6.

FIG. 1 illustrates a drive wheel bearing device according to one embodiment of the invention. The bearing device has a unit of a double-row bearing B and a constant velocity universal joint 60.

The bearing B includes an outer member 10, an inner member 20, and double-row rollers 50 interposed between the outer and inner members 10, 20. The drawing shows one example in which the inner member 20 rotates while the outer member 10 is stationary. The double-row rollers 50 are held by a retainer 51 in circumferentially equally spaced relation in between double-row outer races 11 and inner races 21, 22 and roll on the respective races 11, 21, 22. While this embodiment shows by way of example a bearing in which the rollers 50 are balls, they may be tapered rollers.

The outer member 10 includes the double-row outer races 11 on the inner periphery thereof and an integrally formed flange 12 on the outside for attachment onto the vehicle body; the flange 12 is attached to a mounting member, such as a knuckle extending from a suspension system, on the vehicle body side. Sealing assemblies 13, 14 are provided to either open end of the outer member 10 to seal the space between the outer member 10 and inner member 20 at both axial ends and to prevent leakage of grease filled inside the bearing and penetration of water or foreign matter from outside into the bearing.

As shown in FIG. 2, the sealing assembly 13 for sealing the inboard side of the bearing includes a seal ring 131 attached to a stationary member (outer member 10 in this embodiment) and a slinger 132 attached to a rotating member (inner member 20 in this embodiment). The seal ring 131 is composed of a substantially disc-like metal core 133 having a cylindrical part 133a on its outer periphery that is press-fitted into one end of the outer member 10, a resilient member 134 made of, e.g., rubber fixedly attached to the metal core 133, two inner lips 134a, 134b on the inner side of the resilient member 134, and a side lip 134c on one side of the resilient member on the inboard side. The slinger 132, on the other hand, is composed of a cylindrical part 132a that is press-fitted into a land part 41 on the outside of the inner member 20 and a disc part 132b radially extending from one end of the cylindrical part 132a. The inner lips 134a, 134b make resilient contact with the outer face of the cylindrical part 132a, and the side lip 134c makes resilient contact with the inner face on the outboard side of the disc part 132b. On the outer face of the disc part 132b of the slinger 132 is attached a multipole encoder 81, which will be described later.

Although not illustrated in detail, the sealing assembly 14 for sealing the outboard side of the bearing may be constructed with a resilient seal having three lips similarly to the seal ring 131 shown in FIG. 2, for example. In this case, the part corresponding to the cylindrical part 133a of the seal ring 131 is press-fitted into one end of the outer member 10 on the outboard side, and the parts corresponding to the two inner lips 134a, 134b are resiliently contacted on an outer face of the wheel hub 30 to be described later, and the part corresponding to the side lip 134c is resiliently contacted on a side face of a wheel flange 31 for attachment of a wheel, to be described later.

The inner member 20 consists of a first inner member 30 and a second inner member 40. This embodiment shows a construction, by way of example, in which the first inner member is a wheel hub 30 and the second inner member is an annular inner ring 40 fitted to the outer periphery of the wheel hub. The wheel flange 31 for attachment of a wheel is integrally formed on the wheel hub 30 on the outside on the outboard side, and the outer side of the wheel hub 30 on the inboard side is formed as a small-diameter cylindrical part 32, onto which the inner ring 40 is press-fitted. The inner race 21 on the inboard side is formed on the outer periphery of the inner ring 40, while the race 22 on the outboard side is formed directly on the outer periphery of the wheel hub 30. In this embodiment, as shown in FIG. 2, the aforementioned land part 41 is formed on the outer face of the inner ring 40, and a part (the cylindrical part 132a) of the slinger 132 of the sealing assembly 13 on the inboard side is press-fitted onto this land part 41. The inner member 20 has an axial bore for attachment of an outer joint member 61, to be described later, of a constant velocity universal joint 60.

One side face 33 on the outboard side of the wheel flange 31 forms a surface on which a brake rotor 70 is attached. The brake rotor 70 is fastened to the attachment surface 33 of the wheel flange 31 with bolts, which are not shown. A wheel, which is not shown, is fixed onto the attachment surface 33 of the wheel flange 31, with the brake rotor 70 interposed therebetween, by fastening hub bolts 35.

The constant velocity universal joint 60 transmits torque from the drive shaft to the outer joint member 61 through an inner joint member 62 and torque transmission balls 63. The outer joint member 61 includes a cup-shaped mouth part 61a closed at one end (outboard side) and opened at the other end (inboard side) and a shaft-like stem part 61b, and a plurality of track grooves 64 are formed in the inner periphery of the mouth part 61a. A plurality of ball tracks are formed by these track grooves 64 and a plurality of track grooves 65 provided in the outer periphery of the inner joint member 62; the constant velocity universal joint 60 is constituted by the torque transmission balls 63 arranged in the respective ball tracks. The torque transmission balls 63 are held by a cage 66 on a plane bisecting the two shafts.

The stem part 61b of the outer joint member 61 is press-fitted into the axial bore of the wheel hub 30, whereby the inner member 20 and the outer joint member 61 are coupled together such as to transmit torque by engagement between serrations on the outer periphery of the stem part 61b and the inner periphery of the wheel hub 30. After that, a nut 68 is screwed onto the thread formed at the shaft end of the stem part 61b and tightened to unite the inner ring 40 and wheel hub 30, thereby making both end faces of the inner ring 40 abut on the shoulder 61a1 of the mouth part 61a and the shoulder 36 of the wheel hub 30, respectively, whereby positioning of the inner ring 40 is achieved in the axial direction.

The wheel bearing device of this invention is provided with rotation speed sensing means 80. The rotation speed sensing means 80 measures wheel speed of rotation for use in the ABS and includes, as shown in FIG. 2, an encoder 81 attached to an outer face of the disc part 132b of the rotating slinger 132 of the inboard-side sealing assembly 13, and a sensor 82 fixed to the stationary outer member 10 opposite the encoder 81.

The encoder 81 is constructed, for example, with a ring-like resilient magnetic member having a multiplicity of N and S poles alternating in the circumferential direction, as shown in FIG. 3. The resilient magnetic member is formed of a composite magnetic material obtained by evenly mixing and kneading rubbers or synthetic resins having rubber-like properties (such as polyamide, polyolefin, or ethylene polymer) with magnetic powder (such as barium ferrite or rare earth magnetic powder), and formed into the ring-like shape after crosslinking in the case of using rubber, after which it is magnetized by known magnetizing means such as a multipole magnetic yoke. The resilient magnetic member thus obtained is fixed to the outer face of the disc part 132b of the slinger 132 by sulfurization or adhesion. Examples of rubbers that can be used include NBR (nitrile rubber), acrylic rubber elastomer, fluorine rubber elastomer, and silicon elastomer; of these, particularly, the elastomers (acrylic rubber, fluorine rubber, and silicon) are highly heat resistant, and by using one of these rubbers, thermal effects of brake operation can be suppressed to a minimum.

The encoder 81 may be attached to any rotating member; it may be attached to the inner member 10, for example, instead of the slinger 132.

The sensor 82 in the illustrated example is arranged opposite the encoder 81 with an axial gap therebetween, and fixed to an end face of the outer member 10 at its outer periphery at a mounting portion 82a with a screw 83 or the like, as shown in FIG. 2. The sensor 82 may be, for example, an active sensor constructed with a magnetic sensing element such as a hole element or a magnetic resistance element that changes its output in accordance with the direction of magnetic flux, and an IC including a waveform shaping circuit that shapes the output waveform of the magnetic sensing element. The sensor 82 senses a change in magnetic flux caused by rotation of the encoder 81, determines the rotation speed of the inner member 20 based on the sensor signals, and transmits the wheel rpm data to the ABS controller.

The sensor 82 need not necessarily be attached to the outer member 10 but may be attached to other stationary member such as a mounting member, e.g., a knuckle, on the vehicle side.

According to the invention, the-encoder 81 has the multiplicity of poles in the circumferential direction and can be made thin. Thus thin, compact, and lightweight sensing means 80 is constituted by attaching this to the slinger 132 of the sealing assembly 13, whereby the size and weight of the structure around the wheel are reduced and freedom of design improved.

In this bearing device of the invention, the bearing clearance (axial bearing clearance) is preset to be negative in a dimensional control process before tightening the nut 68. The dimensional control process is carried out for controlling the bearing clearance based on the measurements of various bearing components (including assemblies thereof), and performed, for example, in the following manner:

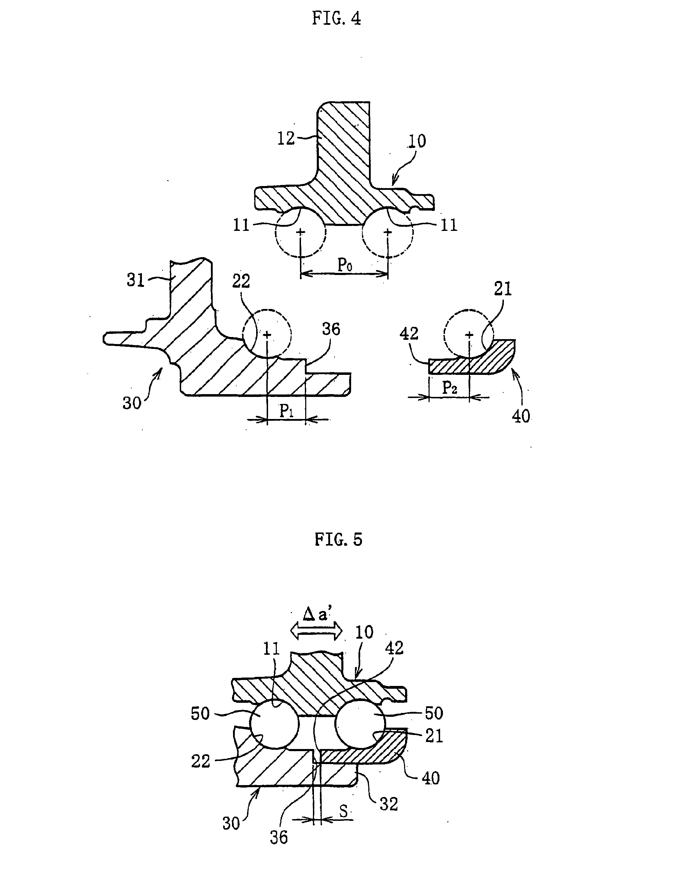

First, referring to FIG. 4, the following measurements are made respectively after the machining of the bearing components: Pitch P₀ and race diameter of the outer races 11 of the outer member 10; the axial dimension P₁ of the wheel hub 30 from the outboard-side race 22 to the shoulder 36 and race diameter; and the axial dimension P₂ of the inner ring 40 from the inner race 21 to the outboard-side end face 42. When assembling, a combination of these bearing components 10, 30, 40 that satisfies the condition of Po > P₁ + P₂, which is one requirement of a double-row angular contact bearing, is selected, whereby the bearing clearance after the assembly is set negative.

The actual negative bearing clearance Δa thus formed can be measured in the following manner in the process of press-fitting the inner ring 40 onto the wheel hub 30.

First, the inner ring 40 is press-fitted onto the wheel hub 30, and the press-fitting is paused at a point where the bearing clearance is still positive, i.e., where the outboard-side end face 42 of the inner ring 40 has approached the shoulder 36 of the wheel hub 30 to a certain extent as shown in FIG. 5, and the clearance S between both faces 36, 42 is measured. Any method can be used for measuring this clearance S; it can, for example, be obtained by providing a jet of compressed air to the clearance S through an air passage formed in the wheel hub in communication with the clearance S, and by measuring the back pressure, flow amount, or flow rate of the compressed air.

Next, the outer member 10 is moved back and forth in the axial direction, and the positive axial bearing clearance Δa' is measured from the maximum amount of movement. After that, the inner ring 40 is pressed in until it contacts the shoulder 36 of the wheel hub 30, to complete the press-fitting. The press-fitting stroke at this time equals to the aforementioned clearance S. Thus, the negative axial beaing clearance Δa can be obtained by calculating Δa' - S.

The negative bearing clearance in the bearing device is thus secured by the above process, and the actual negative clearance can be measured precisely. Accordingly, the negative clearance control is performed much more reliably and precisely than in the conventional method of controlling the clearance based on the tightening torque of the nut 68. With the clearance control achieved as described above, the nut 68 need only be tightened with a low torque to the extent, at least, of preventing separation of the wheel hub 30 and the inner ring 40. It should go without saying that the nut 68 can further be tightened for a final adjustment of the preload.

According to the invention, as described above, the negative bearing clearance is secured reliably, whereby the bearing rigidity is improved and there will be no resilient deformation of the bearing components when a moment load is applied to the wheel bearing device in the cornering or the like of the vehicle, so that the air gap (axial gap in the illustrated example) between the encoder 81 and the sensor 82 of the rotation speed sensing means 80 is maintained stably. Accordingly, the precision of the rotation speed sensing means 80 can be enhanced, and the operation reliability of the ABS can be improved.

Another problem encountered in prior art products is that, when attaching a wheel to the wheel flange 31 with the brake rotor 7 0 therebetween, a portion of the brake rotor 70 that is fastened is sometimes deformed by the tightening force of the hub bolts 35. This deformation, together with machining tolerances or errors present in the brake rotor 70 itself, causes surface vibration on the braking surface (surface that makes sliding contact with a brake pad) of the assembled brake rotor. In prior art, when attaching a brake rotor 70 to a wheel flange 31 of the bearing device that have been separately supplied to an assembling factory, adjustment is made to match the phase of the surface vibration of the wheel flange 31 and that of the brake rotor 70, but this process is very elaborate and time-consuming.

To countermeasure this problem, the amplitude of the surface vibration on the brake rotor attachment surface 33 is controlled to be within a specified limit in this invention. By thus restricting the surface vibration, braking vibration (brake judder) and local wear on the brake resulting from the surface vibration of the brake attachment surface 33 can be suppressed. The limit is determined by a maximum amplitude of vibration on the brake rotor attachment surface 33 when rotated using a stationary member as a reference (outer member 10 in this embodiment); it should be 50 µm or less, and more preferably 30 µm or less.

FIG. 6 illustrates one example of a method of measuring the amplitude of surface vibration on the brake rotor attachment surface 33; the outer member 10 is fixed on a measurement bench 90, and the amplitude of vibration on the brake rotor attachment surface 33 is measured with a measuring device 91 such as a dial gauge when the inner member 20 is rotated one turn relative to the fixed outer member 10. Since the surface vibration of the brake rotor attachment surface 33 is larger on the outer peripheral side of the wheel flange 31, the measuring device 91 is contacted on a position in the middle of the circumscribed circle of a bolt hole 31a in which a hub bolt 35 is press-fitted and the outer circumference of the wheel flange 31, so as to achieve close control of the surface vibration amplitude.

Countermeasures against the surface vibration of the brake rotor attachment surface 33 include the following:
1) The brake rotor attachment surface 33, which has conventionally been finished with only one cutting process, may be cut twice so that the attachment surface 33 has a surface roughness Ra (centerline average roughness according to JISB0601) of 3 µm or less;
2) The brake rotor attachment surface 33 may undergo an additional finishing process such as cutting after the assembly of the wheel bearing device, so as to suppress the surface vibration of the brake rotor attachment surface 33 resulting from assembly misalignment;
3) Both side faces of the brake rotor 70, particularly the surface (braking surface) that makes sliding contact with a brake pad (not shown), may undergo a finishing process such as cutting after the mounting of the brake rotor 70. The finishing process should be performed to such a precision that the maximum amplitude of vibration on the braking surface when rotated relative to a stationary member is 100 µm or less, and more preferably 60 µm or less;
4) The portion around the bolt holes 31a may be left non-hardened so as to have enough ductility to absorb deformation caused by the press-fitting of the bolts;
5) The bolt holes 31a may be chamfered so as to be able to absorb an extra bulge formed by the press-fitting of the bolts;
6) The bearing preload may be set in the range of 981 to 9810N so as to enhance the joint strength of the inner ring 40 and the wheel hub 30 as compared to prior art, thereby eliminating looseness between them that may be caused by a load applied in the opposite direction from the preload because of the moment load or the like in the cornering of the vehicle.

All of these countermeasures against surface vibration given above by way of example need not necessarily be adopted; one of them may be selected in accordance with the conditions of use or applications, or they may be combined as required.

Other embodiments of the invention will be described below with reference to the drawings. In the following description, the same reference numerals will be used for the components that are the same as or similar to those of FIG. 1, the description of which will not be repeated.

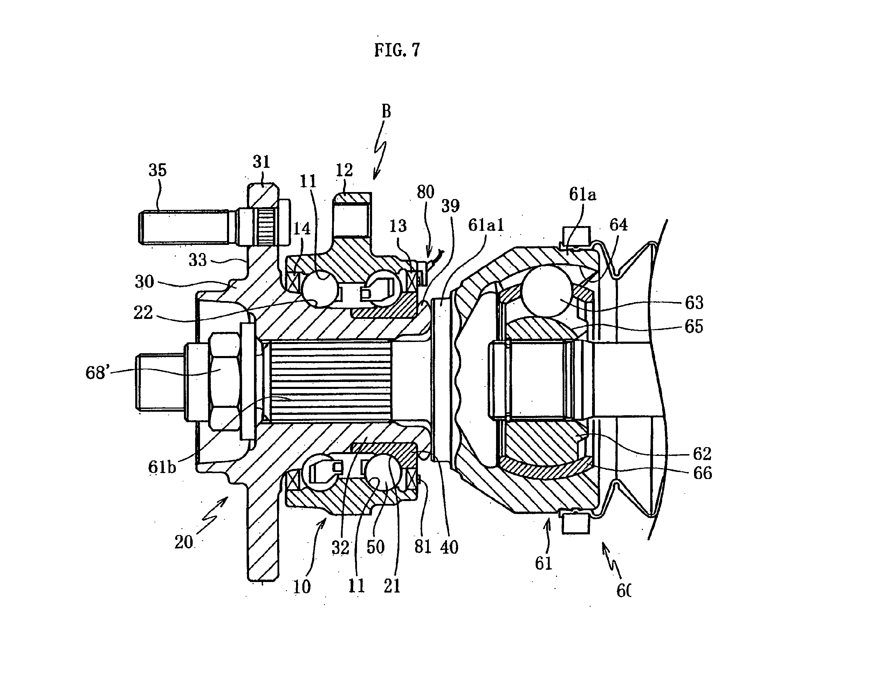

FIG. 7 illustrates one example of a wheel bearing device in which the wheel hub 30 and the inner ring 40 are coupled together by swaging. That is, the shaft end of the inner member 20 on the inboard side, or the shaft end of the small diameter part 32 of the wheel hub 30, is swaged radially outward by plastic deformation to form a flange-like swaged portion 39, whereby the positioning of the inner ring 40 is achieved. Similarly to the embodiment shown in FIG. 1, the bearing clearance is set to be negative by the dimensional control process described in the foregoing with reference to FIG. 4 and FIG. 5, whereby the precision of the rotation speed sensing means 80 is enhanced.

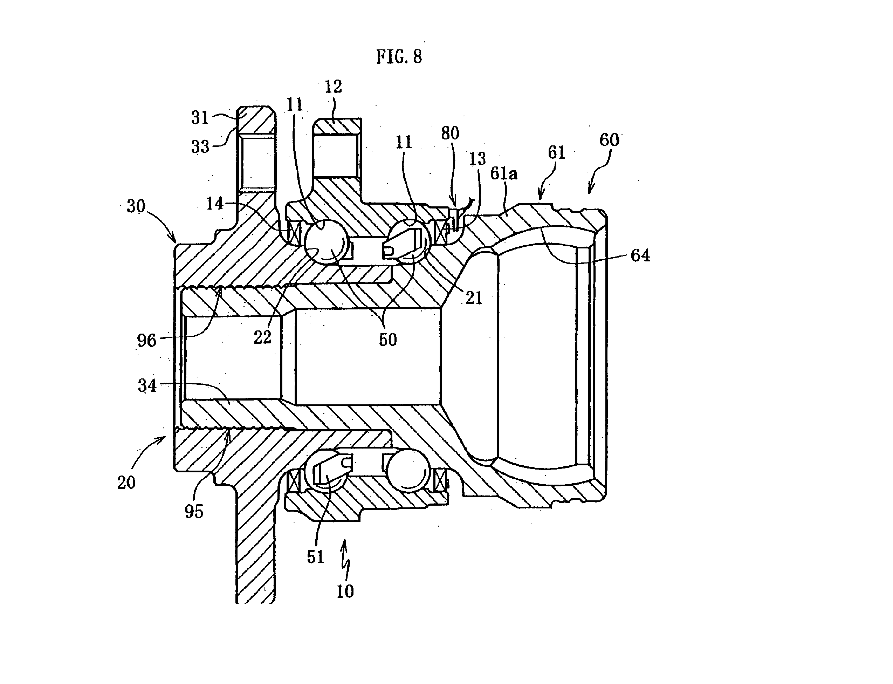

FIG. 8 illustrates another embodiment of a drive wheel bearing device, in which the inner member 20 is formed by the wheel hub 30 and an outer joint member 61. In this case, the outboard-side inner race 22 is formed on the outer face of the wheel hub 30, which is a first inner member, and the inboard-side inner race 21 is formed directly on the outer face of the outer joint member 61, which is a second inner member. The drawing illustrates one example wherein the outer joint member 61 is fitted into the inside of the wheel hub 30, but it may be fitted onto the outside of the wheel hub 30, conversely.

The wheel hub 30 and the outer joint member 61 are coupled together by swaging mating parts 95 of both members in the radial direction to cause, at least partially, expansion or contraction of diameter (expansion in the illustrated example). Irregularities 96 should preferably be provided in the mating parts 95 in this case, so that the irregularities 96 bite into the opposite mating surface as the radial expansion (or contraction) occurs, to further enhance the joint strength. Instead of such radial expansion or contraction swaging, the both members 30, 61 may be coupled together by a flange-like swaged portion 39 formed at one end of the inner member 20, similarly to the example shown in FIG. 7.

In this embodiment, too, similarly to the embodiments shown in FIG. 1. and FIG. 7, the bearing clearance may be set to be negative by the dimensional control process, so as to enhance the precision of the rotation speed sensing means 80.

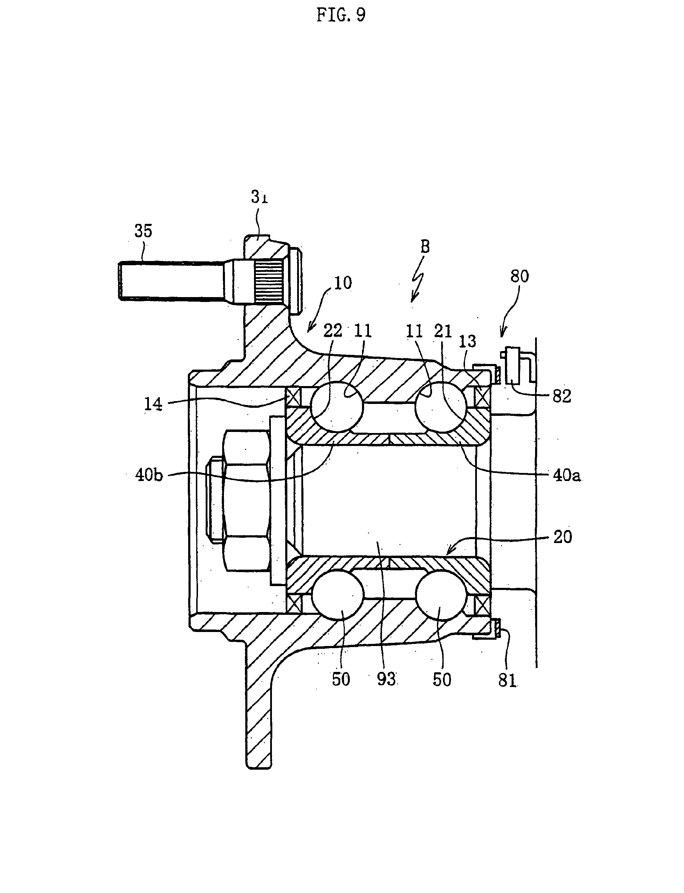

FIG. 9 illustrates one embodiment of a wheel bearing device for driven wheel applications, in which the outer member 10 is rotated, contrary to the embodiments shown in FIG. 1, FIG. 7, and FIG. 8. The wheel flange 31 is formed on the outer periphery of the outer member 10, and a brake rotor and wheel (not shown) are fixed to this flange 31. The inner member 20 is constructed with two inner rings 40a, 40b having inner races 21, 22 on the outside, respectively; these inner rings 40a, 40b are press-fitted to the outer periphery of a wheel shaft 93 provided on the vehicle side such as to abut on each other. In this embodiment, one of the two inner rings 40a, 40b (outboard-side inner ring 40b in the illustrated example) is the first inner member, and the other is the second inner member.

The inboard-side sealing assembly 13 includes a seal ring 131 and a slinger 132 similarly to the one shown in FIG. 2, but it differs from the sealing assembly of FIG. 2 in that the seal ring 131 is fixed to the inner ring 40a that is the stationary side, and the slinger 132 is fixed to the inner periphery of the outer member 10 that is the rotating side. The encoder 81 is attached on either one of the rotating outer member 10 and the slinger 132. (the drawing shows one example in which it is attached to the outer member 10), while the sensor 82 is attached to the stationary wheel shaft 93 opposite the encoder 81, to constitute the rotation speed sensing means 80 having the same functions as described above.

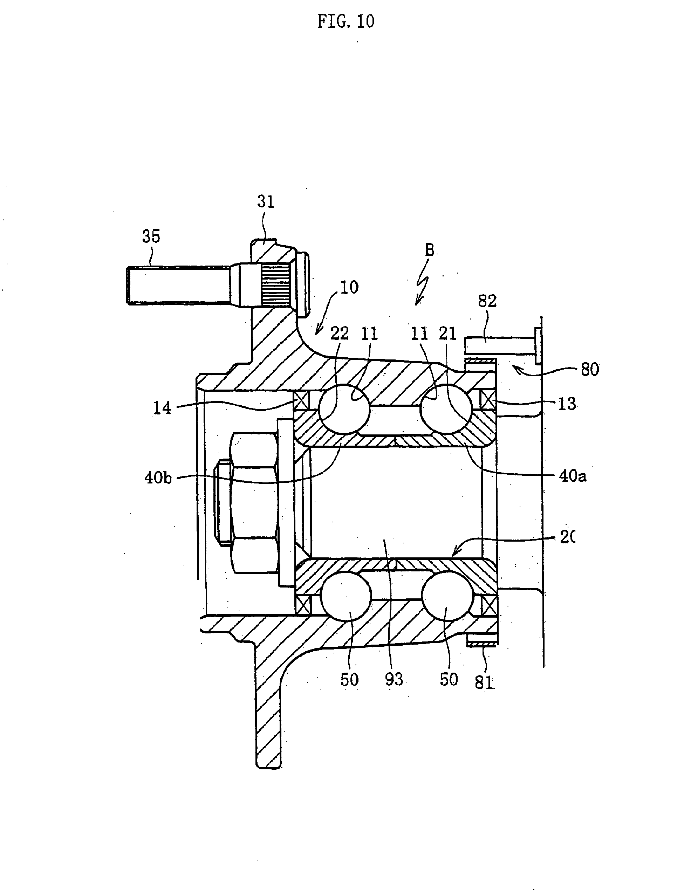

An axial gap is present between the encoder 81 and the sensor 82 in FIG. 9, but this can of course be a radial gap, as shown in FIG. 10. Although not shown, the inner member 20 may be constructed with the two inner rings 40a, 40b and a wheel hub that has a wheel flange, the inner rings 40a, 40b being fitted onto the wheel hub.

According to the invention, as described above, the bearing clearance is controlled to be negative to enhance the bearing rigidity, whereby deterioration of the precision of the wheel rotation speed sensing means that may be caused by cornering or a lane change of the vehicle is avoided, and the operation reliability of the ABS can be improved.

## Claims

1. A wheel bearing device for supporting a wheel such as to be rotatable relative to a vehicle body, comprising:
an outer member having double-row outer races on an inner periphery thereof;
an inner member having double-row inner races respectively opposite the outer races on an outer periphery thereof;
double-row rollers interposed between the respective races of the outer member and the inner member; and
a wheel flange for attachment of a wheel provided to either one of the outer member and the inner member,
wherein
the bearing device has a negative bearing clearance whose dimension is controlled, and
the bearing device includes rotation speed sensing means having a multipole encoder attached to a rotating member and a sensor for sensing a change in magnetic flux caused by rotation of the encoder, so as to determine speed of rotation of the rotating member based on detected data from the sensor.

2. The wheel bearing device according to claim 1, further including a sealing assembly for sealing a space between the inner member and the outer member, wherein said encoder is attached to a slinger, which is a rotating member, of the sealing assembly.

3. The wheel bearing device according to claim 1 or 2, wherein one side face of the wheel flange forms a brake rotor attachment surface, and an amplitude of surface vibration on said brake rotor attachment surface is controlled to be within a specified limit.

4. The wheel bearing device according to claim 3, wherein the surface vibration on said brake rotor attachment surface is restricted not to exceed a maximum vibration amplitude of 50 µm, when either one of the outer member and the inner member is rotated relative to the other one that is stationary.

5. The wheel bearing device according to any one of claims 1 to 4, wherein the inner member includes a first inner member having one of the inner races and a second inner member having the other of the inner races.

6. The wheel. bearing device according to claim 5, wherein the first inner member is a wheel hub and the second inner member is an inner ring fitted to an outer periphery of the wheel hub.

7. The wheel bearing device according to claim 5, wherein the first inner member is a wheel hub and the second inner member is an outer joint member of a constant velocity universal joint.

8. The wheel bearing device according to claim 5, wherein the first inner member and the second inner member are two inner rings abutted on each other.

9. The wheel bearing device according to any one of claims 6 to 8, wherein the first inner member and the second inner member are coupled together by swaging.

10. The wheel bearing device according to claim 6 or 7, wherein the wheel flange is formed on the wheel hub.

11. The wheel bearing device according to claim 8, wherein the wheel flange is formed on the outer member.
